# EUROPEAN PATENT SPECIFICATION

(11) **EP 3 522 259 B1**
(45) Date of publication and mention of the grant of the patent: **05.05.2021**
(21) Application number: 18154607.8
(22) Date of filing: 01.02.2018
(51) Int. Cl.: H01M 50/308, H01M 50/30

(54) **VENTING DEVICE FOR A BATTERY SYSTEM**
ENTLÜFTUNGSVORRICHTUNG FÜR EIN BATTERIESYSTEM
DISPOSITIF DE VENTILATION POUR SYSTÈME DE BATTERIE

(43) Date of publication of application: 07.08.2019
(73) Proprietor: Samsung SDI Co., Ltd., Yongin-si, Gyeonggi-do 17084 (KR)
(72) Inventor: Klomberg, Stephan, 8010 Graz (AT); Röck, Alexander, 8793 Trofaiach (AT); Pranjic, Matej, 8073 Feldkirchen at Graz (AT)
(74) Representative: Gulde & Partner

(56) References cited:
- CN-U- 202 817 116
- CN-U- 206 236 731
- GB-A- 881 402
- JP-A- 2001 266 846
- SU-A1- 603 024

## Description

### Field of the Invention

The present invention relates to a venting device for a battery module housing, to a battery system with the venting device and to a vehicle with the battery system and the venting device.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

To protect people from dangerous fumes and gases that may occur during thermal runaway of expanding gases, venting must be possible, in order to drain the gas to the environment. Further, also in case of cell malfunction, the rechargeable battery requires a battery module housing that is mechanically strong and sealed against the environment. However, it is required to implement an opening in the battery module housing for the purpose of venting, which means safe drainage of gases to the environment. Further, in order to prevent the housing and sealings used in the housing from damage due to increased pressure, for example as a result of gas development or temperature changes, breathing must be enabled. This means, gas needs to be drained safely from the housing, if increase pressure occurs. Further, during normal function of the cells, the opening has to be protected against intrusion of obstacles, humidity and the like. This is normally achieved by filter elements, such as membranes.

In knowns technical solutions the filter elements need to opened at a specified over-pressure or high temperature in order to have a sufficient drainage of gas. It is further known to provide separate breathing and venting devices, wherein the breathing device closes in case of venting.

Further, JP 5880109 B2 discloses an explosion-proof valve, comprising a plurality of latching portions that are fastened to holes formed on the side surface of a battery module housing.

However, known solutions are quite limited regarding their range of possible use in different variants of battery module housings and respective technical systems, to which the battery module housings are assembled. Here, various different assembly conditions may occur. To provide an example, this is the case, if the battery module housing is to be connected to a vehicle structure via the venting device to lead gases to the environment.

### Summary of Invention

It is therefore an objective of the invention to provide an improved venting device allowing for venting and breathing that is flexibly adaptable to different assembly situations and of low technical complexity at the same time.

These objectives are achieved by the subject-matter of the independent claims 1, 12 and 13.

Further aspects of the present invention can be learned from the dependent claims and the following description.

A first aspect of the invention relates to a venting device for a battery module housing, comprising at least:
- a first connection element with a first fluid guiding portion and a first thread element for connecting the venting device with the battery module housing;
- a first sealing element; and
- a first filter element arranged in the first fluid guiding portion.

The venting device of the invention is characterized by being adapted to be sealed against the battery module housing by the first sealing element, if the first connection element is screwed together with the battery module housing.

In other words, the venting device of the invention is a very compact assembly or composite component that may have a rotationally symmetrical hollow body. At least in sections, the hollow body may feature a thread so as to allow for screwing it into an appropriate counter-section of the battery module housing. The hollow body may form a tube-like or pipe-like gas-tight fluid line in the middle. The section provided with the thread can have a first outer diameter. The first outer diameter can be increased in another section to form a shoulder, which may serve as the first sealing element. The shoulder can be screwed against the battery module housing. For this purpose, the shoulder can be provided with appropriate surface parameters to seal against the battery module housing. The shoulder may also be equipped with an additional sealing element being connected to the shoulder. The first filter element may be a membrane, for example. The first filter element can protrude through an inner diameter of the hollow body and be connected to or integrally manufactured with an inner lateral surface of the hollow body. Thus, a fluid such as gas, can exit the battery system guided by the hollow body, thereby being filtered by the first filter element. The fluid may then further be guided by a secondary technical system that may be connected to an exit of the fluid line of the hollow body, for example, if the exit of the fluid line is not directly linked to the environment.

Advantageously, the venting device of the invention is a very compact unit that allows for venting and breathing. Due to the compact structure and the thread it features mechanical strength and can be easily applied to the battery module housing. Screwing the venting device directly to the battery module housing is advantageous in case of a high thickness of a wall of the battery module housing, for example. The venting device of the invention forms a basis for a flexible construction kit, as will be described in the ongoing description.

Preferably, the first filter element has a first mesh size of 950 mm² to 970 mm². The first filter element preferably consists of Polypropylen or Polypropylenvlies.

The above specifications of the first filter element are most suitable to prevent typical fluids, like gases, that accumulate inside a battery system to be filtered and to prevent pollution from entering the battery system, still allowing for a sufficient volume flow passing the first filter element for the purpose of venting and breathing.

Preferably, the first sealing element and/or the first filter element are forming a first composite component with the first connection element. For example, the first sealing element may be manufactured together with the first connection element in a master forming process and/or in a cutting process. For example, the first filter element may be integrally connected to the first connection element in a process, master forming the first connection element. The first connection element may for example consist of PA or PA66.

The first composite component achieved further improves the compact structure of the venting device.

Preferably, the first sealing element and/or the first filter element are forming a first injection molded component with the first connection element. For example, the first sealing element can be injection molded with the first connection element and if necessary additionally worked on with a machine tool to make a sealing surface. Also, a additional sealing part can be integrated in the first connection element to form the first sealing element. For example, a rubber sealing can be used as the additional sealing part. The additional sealing part can be partwise integrated during injection molding. Alternatively, a notch can be manufactured in the first connection element and the additional sealing part can be applied to the notch. For example, the first connection element can be injection molded around the additional sealing part, that forms an insert in this case. However, as stated above, the notch can surely be made in a cutting process, too.

Due to this further improvement of the compact structure of the venting device is achieved and the number of manufacturing steps is reduced.

Preferably, the first connection element comprises a collar to which the first sealing element is applied. In other words, the first sealing element may consist of a shoulder that carries or forms a sealing. For example, the first sealing element may comprise one or more O-rings.

This embodiment provides significant advantage, as the venting device can be screwed against the battery module housing, thereby tightly pressing the first sealing element down on a counter-surface of the battery module housing. Integrating the first sealing element in the first connection element advantageously reduces the number of sealing points.

Preferably, the venting device further comprises a complementary thread element screwable to the first thread element so as to allow for clamping of a wall of the battery module housing between the complementary thread element and the first sealing element. For example, the complementary thread element may be a nut screwable to the first thread element so as to allow for clamping of the battery module housing between the nut and the first sealing element. This means, that instead of screwing the venting device directly into the wall of the battery module housing, the wall can be clamped by the nut.

This is advantageous in case of a low thickness of the wall of the battery module housing, since providing a counter-thread in the wall maybe impossible. Further, there may be situations in which a counter-thread shall not be formed in the wall for other technical reasons.

The venting device further comprises a complementary connection element that is releasably connectable to the first connection element from a side of the first sealing element which is averted from the first thread element, with the complementary connection element having a complementary fluid guiding portion that elongates the first fluid guiding portion of the first connection element, if connected thereto, and the complementary connection element has a second sealing element to seal the venting device against a secondary technical system that is to be fluidly connected to the battery module housing.

The second sealing element may be integrally manufactured with the complementary connection component or applied as an additional sealing part. The complementary connection component and the first connection component comprise connection means, so as to allow for connecting and disconnecting the complementary connection component and the first connection component. The complementary connection component may be applied to, for example, a backside of the shoulder of the first connection component. The connection means, if engaged to each other, may be allocated on an outer lateral surface of, for example, the shoulder. The complementary fluid guiding portion then elongates the first fluid guiding portion of the first connection component, thus forming an elongated common fluid guiding portion. Again in other words, in this embodiment an entry of the elongated common fluid guiding portion is formed at one end of the venting device by the first connection element and an exit of the elongated common fluid guiding portion is formed at another end of the venting device by the complementary connection element. The second sealing element for sealing against the secondary technical system is preferably provided at the exit of the elongated common fluid guiding portion. Preferably, the second sealing element is arranged around the exit of the elongated common fluid guiding portion. The secondary technical system may for example be a vehicle, further as an example a chassis of the vehicle. The second sealing element functions as an interface to the other secondary technical system.

Advantageously, the second sealing element can be flexibly adapted to different secondary technical systems, for example to different assembly spaces in varying secondary technical systems, wherein a distance between the battery module housing and an area of the secondary technical system, that is to be bridged by the venting device, varies.

Preferably, the second sealing element is made of foam rubber applied to the complementary connection element. For example, the foam rubber may be applied around an exit of the elongated common fluid guiding portion. The foam rubber may for example be glued to the complementary connection element.

Such as second sealing element can advantageously be manufactured at low effort and allows for compensation for tolerances in the assembly space with respect to the secondary technical system and further assures safe sealing to the secondary technical system without high requirements to the surface of the secondary technical system. This is for example beneficial if the surface is formed by a chassis of a vehicle.

Preferably, the complementary connection element and the first connection element are connectable by a latching mechanism.

A latching mechanism is very suitable for flexible connection and disconnection of different variants of complementary connection elements and first connection elements. This further enhances the modularity of the venting device.

Preferably, the latching mechanism comprises at least three latching portions, uniformly distributed over an outer contour of the complementary connection element and the first connection element, respectively.

This way, a safe and stiff connection is provided between the complementary connection element and the first connection element.

Preferably, the complementary connection element comprises a second filter element arranged in the complementary fluid guiding portion. The second filter element may preferably be a strainer-type of filter element.

Advantageously, the second filter element enhances the security of the filtering function of the venting device and is easy applicable as a strainer-type of filter element. The second filter element may prevent larger objects from entering the elongated common fluid guiding portion and can thus also protect the first filter element.

Preferably, the second filter element has a second mesh size, larger than the first mesh size of the first filter element. The second filter element preferably has a second mesh size of 950 mm² to 970 mm².

In the given dimensions the second filter element can be easily manufactured and is suitable to hold back larger objects that normally occur in the environment of a vehicle.

A second aspect of the invention refers to a battery system, comprising a battery module housing and a venting device of the invention, wherein the venting device is connected to the battery module housing by functional surface pairing of at least one thread element of the venting device and the battery module housing.

Accordingly, the previous description applies to the battery system of the invention and preferred embodiments of the battery system correspond to preferred embodiments of the inventive venting device.

A third aspect of the invention refers to a vehicle, comprising a battery system of the invention, wherein a second sealing element of a complementary connection element of a venting device of the battery system is in contact with a secondary technical system of the vehicle.

Preferably, the secondary technical system may be a chassis of the vehicle. Fluid, such as gas, can be safely guided out from the battery system via the venting device throughout the secondary technical system to the environment.

Accordingly, the previous description applies to the vehicle of the invention and preferred embodiments of the vehicle correspond to preferred embodiments of the inventive battery system.

### Brief Description of the Drawings

Features will become apparent to those of ordinary skill in the art by describing in detail exemplary embodiments with reference to the attached drawings in which:
- Fig. 1: illustrates a schematic perspective view of a venting device according to an embodiment;
- Fig. 2: illustrates a schematic perspective view of a venting device according to another embodiment;
- Fig. 3: illustrates a schematic perspective view of a venting device not according to the invention.
- Fig. 4: illustrates a schematic perspective view of a complementary connection element of a venting device according to an embodiment;
- Fig. 5: illustrates a schematic perspective view of a venting device according to another embodiment;
- Fig. 6: illustrates a schematic cross-sectional perspective view of a venting device according to the embodiment shown in Fig. 5;
- Fig. 7: illustrates a schematic perspective view of a venting device according to another embodiment; and
- Fig. 8: illustrates a vehicle with a battery system and a venting device according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items.

In the drawings, the sizes of elements may be exaggerated or demagnfied for clarity. For example, in the drawings, the size or thickness of each element may be arbitrarily shown for illustrative purposes, and thus the embodiments of the present invention should not be construed as being limited thereto.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

Features of the inventive concept and methods of accomplishing the same may be understood more readily by reference to the following detailed description of embodiments and the accompanying drawings. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described.

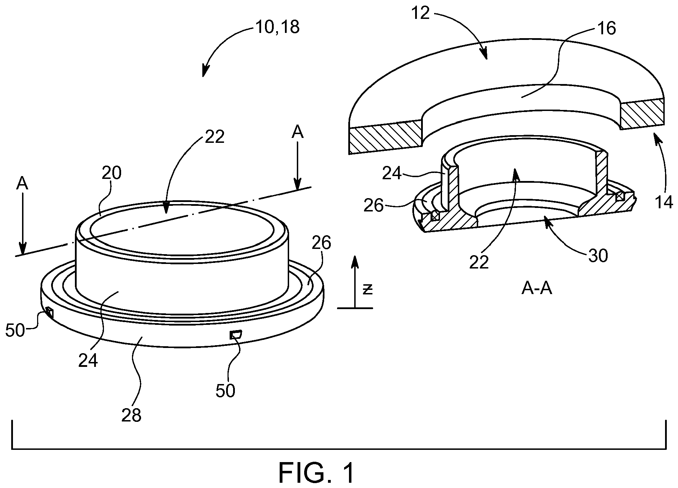

Fig. 1 illustrates a schematic perspective view of a venting device 10 according to an embodiment. On the right of Fig. 1 there is a cross sectional view of the venting device 10 shown on the left.

The venting device 10 can be connected to a battery module housing 12 which is only shown schematically. The battery module housing 12 has a wall 14 and a threaded connection portion 16. The wall 14 may be thick in this embodiment, for example 10 mm or 20 mm.

The venting device 10 in this embodiment is a first composite component 18. The first composite component 18 has a first connection element 20 that forms a first fluid guiding portion 22. A first thread element 24 is featured on an outer surface of the first connection element 20. As indicated in Fig. 1, the first thread element 24 may be used to connect the venting device 10 to the threaded connection portion 16 of the battery module housing 12. A first sealing element 26 is implemented in the composite component 18, for example as an additional sealing part. The first sealing element 26 may be an O-ring sealing made of a rubber material. The first sealing element 26 is implemented in a collar 28 of the first connection element 20. The first sealing element 26 may be integrated in the composite component 18 by making a first injection molded component. Accordingly, the connection element 20 may be made of a material suitable for an injection molding process, such as Polyamide. As Polyamide is a quite soft material even in a solid state, this supports the sealing function of the venting device in the area of the threaded connection portion 16 of the battery module housing 12, too. Further, a first filter element 30 is integrated in the composite component 18, which may be done during injection molding. This way, only a single injection molding process is required. The first filter element 30 may be made of Polypropylen. It may be a membrane and may have a first mesh size of 950 mm². As can be seen, the first filter element 30 is arranged in the first fluid guiding portion 22, to filter gas that may escape the battery module housing 12.

By screwing together the venting device 10 and the battery module housing 12, the first sealing element 26, supported by the collar 28, is pressed against the wall 14. Thus, the venting device 10 is safely and easily sealed against the battery module housing 12.

The first connection element 20 comprises a number of latching portions 50, which will be referred to later on.

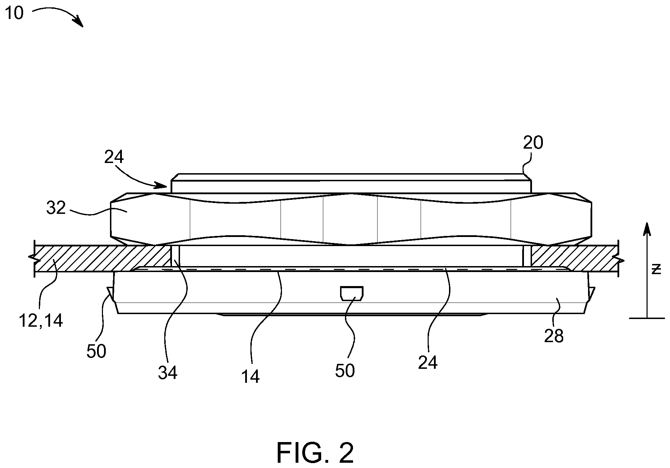

Now referring to Fig. 2, another embodiment of the venting device 10 is shown, which is based on the embodiment of Fig. 1, so that only the differences are highlighted herein.

Instead of screwing the venting device 10 directly into the wall 14 of the battery module housing 12, a complementary thread element 32 is provided by the venting device 10. Instead of the threaded connection portion 16, the battery module housing 12 may comprise a simple passage 34, to which the first connection element 20 is pushed through. To secure the venting device 10 in this position, the complementary thread element 32 is screwed onto the first thread element 24, thereby pressing the first sealing element 26 against the wall 14. This embodiment is very suitable, if the wall 14 has a low thickness, such as 2 mm or 3 mm, which is then clamped in-between the complementary thread element 32, a nut for example, and the first sealing element 26, for example supported by the collar 28.

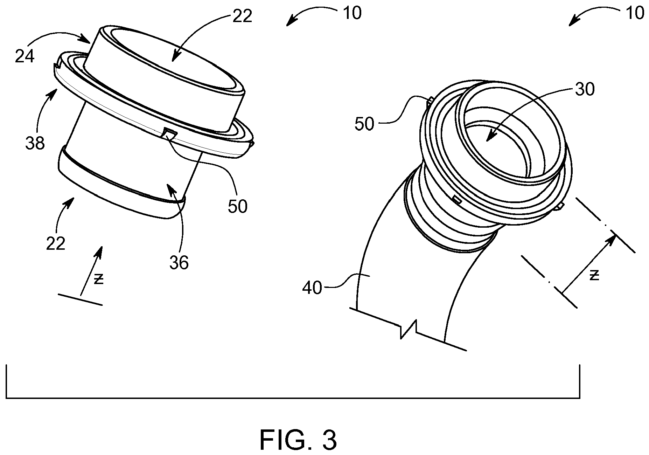

Now referring to Fig. 3, the venting device 10 not according to the invention is shown, which is based on the embodiment of Fig. 1, so that only the differences are highlighted herein.

As can be seen, a hose connection portion 36 is comprised by the venting device 10. The hose connection portion 36 is located on a side 38 of the first sealing element 26 that is averted from the first thread element 24. There, the hose connection portion 36 elongates the first fluid guiding portion 22 and allows for assembling the venting device 10 to a hose 40, only schematically shown. The hose 40, if applied to the venting device 10, allows for easy and flexible drainage of gas.

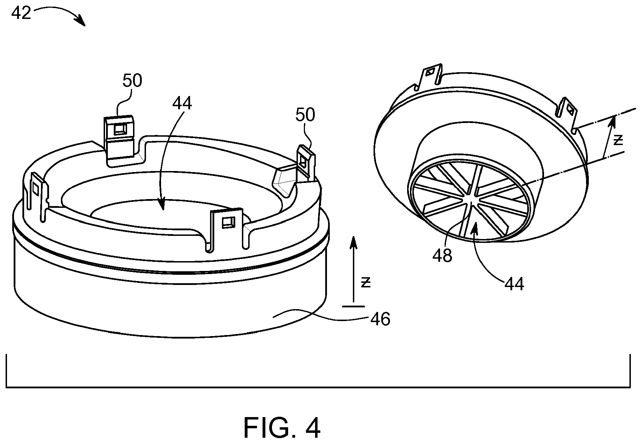

Now referring to Fig. 4, a complementary connection element 42 of the venting device 10 is shown. The other embodiments of the venting device 10 are further shown in Fig. 4 to 7.

The complementary connection element 42 comprises a complementary fluid guiding portion 44 and a second sealing element 46. The complementary connection element 42 may also be an injection molded part. The second sealing element 46 may be made of foam rubber that may be applied to the complementary connection element 42 in a second injection molding process or may be glued to the complementary connection element 42 as an additional sealing part. Further, the complementary connection element 42 comprises a second filter element 48. The second filter element 48 may be made of PA or PA66. It may be embodied by a strainer-type of filter element and may have a second mesh size of 950 mm². Thus, larger objects can be prevented from entering the complementary fluid guiding portion 44.

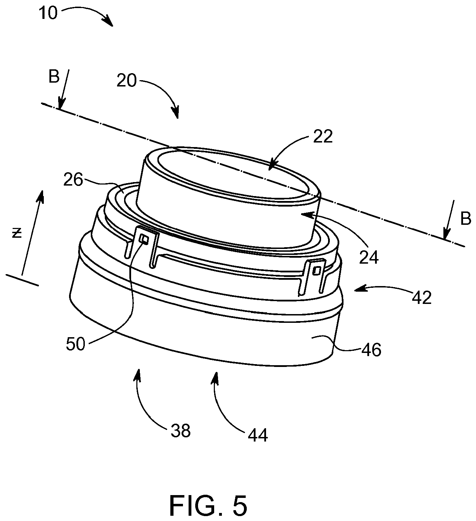

Now, exemplarily referring to Fig. 4 and 1, it is highlighted that the first connection element 20 and the complementary connection element 42 are each comprising a number of latching portions 50. As shown, the first connection element 20 may have male latching portions 50 and the complementary connection element 42 may have female latching portions 50. By bringing the latching portions 50 of the first complementary connection element 42 and the first connection element 20 into engagement, an assembly as described in Fig. 5 to 7 can be obtained, which will be discussed in more detail later.

In the illustrated examples the first connection element 20 and the complementary connection element 42 are each comprising four latching portions 50. The latching portions 50 are uniformly distributed over an outer contour of the complementary connection element 42 and the first connection element 20, respectively.

Now referring to Fig. 5, another embodiment of the venting device 10 is shown, which is based on the embodiment of Fig. 1 along with the complementary connection element 42 shown in Fig. 4, so that only the differences regarding the embodiments of the venting device shown in Fig. 1 is highlighted herein.

As can be seen, the complementary connection element 42 and the first connection element 20 are releasably connected by a latching mechanism formed by the latching portions 50. The complementary connection element 42 is connected to the first connection element 20 from the side 38 of the first sealing element 26 that is averted from the first thread element 24. This way, the first fluid guiding portion 22 is elongated by the complementary fluid guiding portion 44.

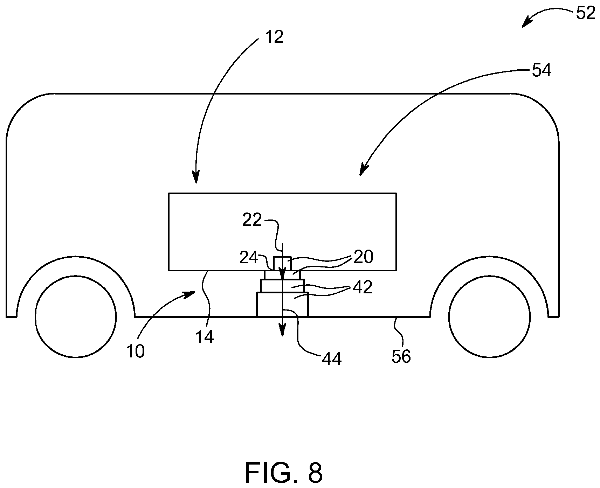

If the venting device 10 is connected to the battery module housing 12, the venting device 10 may fluidly connect the battery module housing 12 with a secondary technical system 56 (see Fig. 8), wherein the second sealing element 46 functions as an interface safely sealing the venting device 10 against the secondary technical system 56.

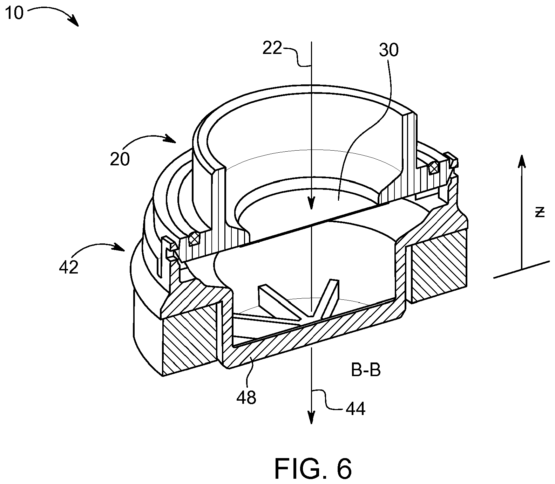

Now turning to Fig. 6, a cross sectional view of the embodiment of the venting device 10 of Fig. 5 is shown. Here, the first fluid guiding portion 22 elongated by the complementary fluid guiding portion 44 is shown in more detail, both forming an elongated common fluid guiding portion running through the first and second filter element 30, 48. To protect the elongated common fluid guiding portion and the first filter element 30 from objects coming from the environment, the second filter element 48 has a second mesh size, larger than the first mesh size of the first filter element 30.

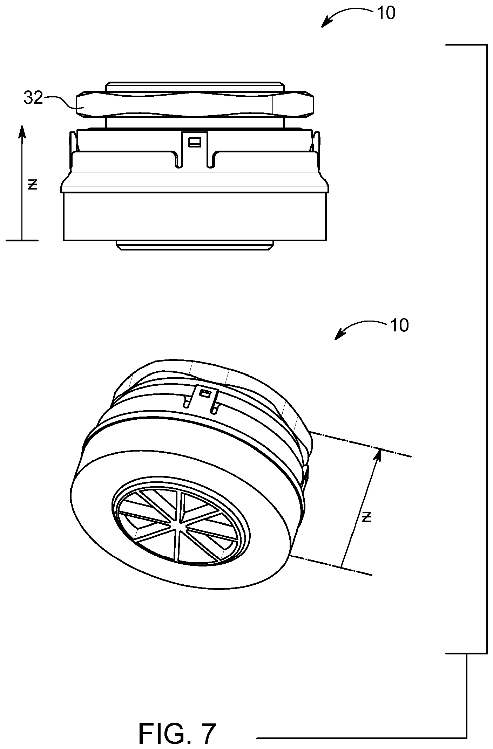

Now referring to Fig. 7, another embodiment of the venting device 10 is shown, which is based on the embodiment of Fig. 2 along with the complementary connection element 42 shown in Fig. 4, so that only the difference regarding the embodiment of the venting device shown in Fig. 5 shall highlighted herein, which is the use of the complementary thread element 32.

Now referring to Fig. 8, a vehicle 52 with a battery system 54 and a venting device 10 according to an embodiment is shown.

The venting device 10 is on the one hand connected to the wall 14 of the battery module housing 12 by functional surface pairing of the first thread element 24 of the venting device 10 and the threaded connection portion 16 of the battery module housing 12. Further, the second sealing element 46 of the complementary connection element 42 of the venting device 10 is closely in contact with a secondary technical system 56 of the vehicle 52. The secondary technical system 56 is a chassis of the vehicle 52 in this example, but may be different in other embodiments.

The shown application of the venting device 10 allows for drainage of fluid like gas from the battery system 54 to the environment 58 of the vehicle 52 via the first fluid guiding portion 22 and the complementary fluid guiding portion 44.

## Claims

1. Venting device (10) for a battery module housing (12), comprising at least:
- a first connection element (20) with a first fluid guiding portion (22) and a first thread element (24) for connecting the venting device (10) with the battery module housing (12);
- a first sealing element (26); and
- a first filter element (30) arranged in the first fluid guiding portion (22);
wherein the venting device (10) is adapted to be sealed against the battery module housing (12) by the first sealing element (26), if the first connection element (20) is screwed together with the battery module housing (12), and
wherein the venting device (10) further comprises a complementary connection element (42) that is releasably connectable to the first connection element (20) from a side (38) of the first sealing element (26) which is averted from the first thread element (24), with the complementary connection element (42) having a complementary fluid guiding portion (44) that elongates the first fluid guiding portion (22) of the first connection element (20), if connected thereto, and the complementary connection element (42) having a second sealing element (46) that is adapted to seal the venting device (10) against a secondary technical system (56) that is to be fluidly connected to the battery module housing (12).

2. Venting device (10) of claim 1, **characterized in that** the first filter element (30) has a first mesh size of 950 mm² to 970 mm².

3. Venting device (10) of one of the preceding claims, **characterized in that** the first sealing element (26) and/or the first filter element (30) are forming a first composite component (18) with the first connection element (20).

4. Venting device (10) of claim 1 or 2, **characterized in that** the first sealing element (26) and/or the first filter element (30) are forming a first injection molded component with the first connection element (20).

5. Venting device (10) of one of the preceding claims, **characterized in that** the first connection element (20) comprises a collar (28) to which the first sealing element (26) is applied.

6. Venting device (10) of one of the preceding claims, **characterized in that** the venting device (10) further comprises a complementary thread element (32) screwable to the first thread element (24) so as to allow for clamping of a wall (14) of the battery module housing (12) between the complementary thread element (32) and the first sealing element (26).

7. Venting device (10) of claim 1, **characterized in that** the second sealing element (46) is made of foam rubber applied to the complementary connection element (42).

8. Venting device (10) of claim 1 or 7, **characterized in that** the complementary connection element (42) and the first connection element (20) are connectable by a latching mechanism.

9. Venting device (10) of claim 8, **characterized in that** the latching mechanism comprises at least three latching portions (50), uniformly distributed over an outer contour of the complementary connection element (42) and the first connection element (20), respectively.

10. Venting device (10) of one of the claims 1 and 7 to 9, **characterized in that** the complementary connection element (42) comprises a second filter element (48) arranged in the complementary fluid guiding portion (44).

11. Venting device (10) of claim 10, **characterized in that** the second filter element (48) has a second mesh size, larger than the first mesh size of the first filter element (30).

12. Battery system (54), comprising a battery module housing (12) and a venting device (10) of one of the preceding claims, wherein the venting device (10) is connected to the battery module housing (12) by functional surface pairing of at least one thread element (24, 32) of the venting device (10) and the battery module housing (12).

13. Vehicle (52), comprising a battery system (54) of claim 12, wherein a second sealing element (46) of a complementary connection element (42) of a venting device (10) of the battery system (54) is in contact with a secondary technical system (56) of the vehicle (52).

## Patentansprüche

1. Entlüftungsvorrichtung (10) für ein Batteriemodulgehäuse (12), aufweisend zumindest:
- ein erstes Verbindungselement (20) mit einem ersten Fluidführungsabschnitt (22) und einem ersten Gewindeelement (24) zum Verbinden der Entlüftungsvorrichtung (10) mit dem Batteriemodulgehäuse (12);
- ein erstes Dichtungselement (26); und
- ein erstes Filterelement (30), das im ersten Fluidführungsabschnitt (22) angeordnet ist;
wobei die Entlüftungsvorrichtung (10) angepasst ist, um durch das erste Dichtungselement (26) gegenüber dem Batteriemodulgehäuse (12) abgedichtet zu sein, wenn das erste Verbindungselement (20) mit dem Batteriemodulgehäuse (12) verschraubt ist, und
wobei die Entlüftungsvorrichtung (10) ferner ein komplementäres Verbindungselement (42) aufweist, das von einer Seite (38) des ersten Dichtungselements (26) aus, die vom ersten Gewindeelement (24) abgewandt ist, mit dem ersten Verbindungselement (20) lösbar verbunden werden kann, wobei das komplementäre Verbindungselement (42) einen komplementären Fluidführungsabschnitt (44) aufweist, der den ersten Fluidführungsabschnitt (22) des ersten Verbindungselements (20) verlängert, wenn er damit verbunden ist, und wobei das komplementäre Verbindungselement (42) ein zweites Dichtungselement (46) aufweist, das angepasst ist, um die Entlüftungsvorrichtung (10) gegenüber einem sekundären technischen System (56), das mit dem Batteriemodulgehäuse (12) fluidverbunden werden soll, abzudichten.

2. Entlüftungsvorrichtung (10) nach Anspruch 1, **dadurch gekennzeichnet, dass** das erste Filterelement (30) eine erste Maschengröße von 950 mm² bis 970 mm² aufweist.

3. Entlüftungsvorrichtung (10) nach einem der vorhergehenden Ansprüche, **dadurch gekennzeichnet, dass** das erste Dichtungselement (26) und/oder das erste Filterelement (30) eine erste Verbundkomponente (18) mit dem ersten Verbindungselement (20) ausbilden/ausbildet.

4. Entlüftungsvorrichtung (10) nach Anspruch 1 oder 2, **dadurch gekennzeichnet, dass** das erste Dichtungselement (26) und/oder das erste Filterelement (30) mit dem ersten Verbindungselement (20) eine erste spritzgegossene Komponente ausbilden/ausbildet.

5. Entlüftungsvorrichtung (10) nach einem der vorhergehenden Ansprüche, **dadurch gekennzeichnet, dass** das erste Verbindungselement (20) einen Kragen (28), auf dem das erste Dichtungselement (26) aufgebracht wird, aufweist.

6. Entlüftungsvorrichtung (10) nach einem der vorhergehenden Ansprüche, **dadurch gekennzeichnet, dass** die Entlüftungsvorrichtung (10) ferner ein komplementäres Gewindeelement (32) aufweist, das mit dem ersten Gewindeelement (24) verschraubbar ist, um das Festklemmen einer Wand (14) des Batteriemodulgehäuses (12) zwischen dem komplementären Gewindeelement (32) und dem ersten Dichtungselement (26) zu ermöglichen.

7. Entlüftungsvorrichtung (10) nach Anspruch 1, **dadurch gekennzeichnet, dass** das zweite Dichtungselement (46) aus Schaumgummi, der auf das komplementäre Verbindungselement (42) aufgebracht wird, besteht.

8. Entlüftungsvorrichtung (10) nach Anspruch 1 oder 7, **dadurch gekennzeichnet, dass** das komplementäre Verbindungselement (42) und das erste Verbindungselement (20) durch einen Verriegelungsmechanismus verbindbar sind.

9. Entlüftungsvorrichtung (10) nach Anspruch 8, **dadurch gekennzeichnet, dass** der Verriegelungsmechanismus zumindest drei Verriegelungsabschnitte (50), die jeweils gleichmäßig über eine Außenkontur des komplementären Verbindungselements (42) und des ersten Verbindungselements (20) verteilt sind, aufweist.

10. Entlüftungsvorrichtung (10) nach einem der Ansprüche 1 und 7 bis 9, **dadurch gekennzeichnet, dass** das komplementäre Verbindungselement (42) ein zweites Filterelement (48), das im komplementären Fluidführungsabschnitt (44) angeordnet ist, aufweist.

11. Entlüftungsvorrichtung (10) nach Anspruch 10, **dadurch gekennzeichnet, dass** das zweite Filterelement (48) eine zweite Maschengröße, die größer als die erste Maschengröße des ersten Filterelements (30) ist, aufweist.

12. Batteriesystem (54), aufweisend ein Batteriemodulgehäuse (12) und eine Entlüftungsvorrichtung (10) nach einem der vorhergehenden Ansprüche, wobei die Entlüftungsvorrichtung (10) durch funktionale Oberflächenpaarung zumindest eines Gewindeelements (24, 32) der Entlüftungsvorrichtung (10) und des Batteriemodulgehäuses (12) mit dem Batteriemodulgehäuse (12) verbunden ist.

13. Fahrzeug (52), aufweisend ein Batteriesystem (54) nach Anspruch 12, wobei ein zweites Dichtungselement (46) eines komplementären Verbindungselements (42) einer Entlüftungsvorrichtung (10) des Batteriesystems (54) mit einem sekundären technischen System (56) des Fahrzeugs (52) in Kontakt steht.

## Revendications

1. Dispositif de mise à l'air libre (10) pour un boîtier de module de batterie (12) comprenant au moins :
- un premier élément de raccordement (20) avec une première partie de guidage de fluide (22) et un premier élément de filetage (24) pour raccorder le dispositif de mise à l'air libre (10) avec le boîtier de module de batterie (12) ;
- un premier élément d'étanchéité (26) ; et
- un premier élément de filtre (30) agencé dans la première partie de guidage de fluide (22) ;
où le dispositif de mise à l'air libre (10) est adapté pour être scellé contre le boîtier de module de batterie (12) par le premier élément d'étanchéité (26), si le premier élément de raccordement (20) est vissé conjointement avec le boîtier de module de batterie (12), et
où le dispositif de mise à l'air libre (10) comprend en outre un élément de raccordement complémentaire (42) qui peut être raccordé de manière amovible au premier élément de raccordement (20) à partir d'un côté (38) du premier élément d'étanchéité (26) qui est opposé au premier élément de filetage (24), avec l'élément de raccordement complémentaire (42) qui a une partie de guidage de fluide complémentaire (44) qui allonge la première partie de guidage de fluide (22) du premier élément de raccordement (20), si elle y est raccordée, et l'élément de raccordement complémentaire (42) ayant un second élément d'étanchéité (46) qui est adapté pour sceller le dispositif de mise à l'air libre (10) contre un système technique secondaire (56) qui doit être raccordé de manière fluidique au boîtier de module de batterie (12).

2. Dispositif de mise à l'air libre (10) selon la revendication 1, **caractérisé en ce que** le premier élément de filtre (30) a une première taille de maille de 950 mm² à 970 mm².

3. Dispositif de mise à l'air libre (10) selon l'une des revendications précédentes, **caractérisé en ce que** le premier élément d'étanchéité (26) et/ou le premier élément de filtre (30) forment un premier composant composite (18) avec le premier élément de raccordement (20).

4. Dispositif de mise à l'air libre (10) selon la revendication 1 ou 2, **caractérisé en ce que** le premier élément d'étanchéité (26) et/ou le premier élément de filtre (30) forment un premier composant moulé par injection avec le premier élément de raccordement (20).

5. Dispositif de mise à l'air libre (10) selon l'une des revendications précédentes, **caractérisé en ce que** le premier élément de raccordement (20) comprend un collier (28) sur lequel le premier élément d'étanchéité (26) est appliqué.

6. Dispositif de mise à l'air libre (10) selon l'une des revendications précédentes, le dispositif de mise à l'air libre (10) étant **caractérisé en ce qu'**il comprend en outre un élément de filetage complémentaire (32) pouvant être vissé sur le premier élément de filetage (24) afin de permettre le serrage d'une paroi (14) du boîtier de module de batterie (12) entre l'élément de filetage complémentaire (32) et le premier élément d'étanchéité (26).

7. Dispositif de mise à l'air libre (10) selon la revendication 1, **caractérisé en ce que** le second élément d'étanchéité (46) est réalisé avec du caoutchouc en mousse appliqué sur l'élément de raccordement complémentaire (42).

8. Dispositif de mise à l'air libre (10) selon la revendication 1 ou 7, **caractérisé en ce que** l'élément de raccordement complémentaire (42) et le premier élément de raccordement (20) peuvent être raccordés par un mécanisme de verrouillage.

9. Dispositif de mise à l'air libre (10) selon la revendication 8, **caractérisé en ce que** le mécanisme de verrouillage comprend au moins trois parties de verrouillage (50), uniformément réparties sur un contour externe de l'élément de raccordement complémentaire (42) et le premier élément de raccordement (20), respectivement.

10. Dispositif de mise à l'air libre (10) selon l'une des revendications 1 et 7 à 9, **caractérisé en ce que** l'élément de raccordement complémentaire (42) comprend un second élément de filtre (48) agencé dans la partie de guidage de fluide complémentaire (44).

11. Dispositif de mise à l'air libre (10) selon la revendication 10, **caractérisé en ce que** le second élément de filtre (48) a une seconde taille de maille supérieure à la première taille de maille du premier élément de filtre (30) .

12. Système de batterie (54) comprenant un boîtier de module de batterie (12) et un dispositif de mise à l'air libre (10) selon l'une des revendications précédentes, dans lequel le dispositif de mise à l'air libre (10) est raccordé au boîtier de module de batterie (12) par association par surface fonctionnelle d'au moins un élément de filetage (24, 32) du dispositif de mise à l'air libre (10) et du boîtier de module de batterie (12).

13. Véhicule (52) comprenant un système de batterie (54) selon la revendication 12, dans lequel un second élément d'étanchéité (46) d'un élément de raccordement complémentaire (42) d'un dispositif de mise à l'air libre (10) du système de batterie (54) est en contact avec un système technique secondaire (56) du véhicule (52).
